# FASCICULE DE BREVET EUROPEEN

(11) **EP 3 612 445 B1**
(45) Date de publication et mention de la délivrance du brevet: **09.06.2021**
(21) Numéro de dépôt: 18716269.8
(22) Date de dépôt: 09.04.2018
(51) Int. Cl.: B64C 3/32, B64D 27/26

(54) **ENSEMBLE POUR AERONEF COMPRENANT UNE STRUCTURE PRIMAIRE DE MAT D'ACCROCHAGE FIXEE A UN CAISSON DE VOILURE A L'AIDE D'UNE LIAISON BOULONNEE**
ANORDNUNG FÜR FLUGZEUG MIT EINER PRIMÄRSTRUKTUR EINES MIT EINER BOLZENVERBINDUNG AN EINEM FLÜGELKASTEN BEFESTIGTEN BEFESTIGUNGSPYLONS
ASSEMBLY FOR AIRCRAFT COMPRISING A PRIMARY STRUCTURE OF AN ATTACHMENT PYLON ATTACHED TO A WING BOX USING A BOLTED CONNECTION

(30) Priorité: 19.04.2017 FR 1753403
(43) Date de publication de la demande: 26.02.2020
(73) Titulaire: Airbus Operations (S.A.S.), 31060 Toulouse (FR)
(72) Inventeur: PAUTIS, Olivier, 31330 Merville (FR); LAFONT, Laurent, 31320 Pechbusque (FR); NANDA, Rohan, 31000 Toulouse (FR)
(74) Mandataire: Sarraméa, Claude
(86) Numéro de dépôt international: PCT/EP2018/058960
(87) Numéro de publication internationale: WO 2018/192787

(56) Documents cités:
- EP-A1- 1 535 837
- WO-A1-2007/012667
- WO-A2-2011/012822
- FR-A1- 2 887 522
- US-A1- 2011 127 371

## Description

### DOMAINE TECHNIQUE

La présente invention se rapporte au domaine des aéronefs, et en particulier aux ensembles comprenant une aile d'aéronef ainsi qu'un mât d'accrochage de moteur fixé sous cette aile. L'invention concerne de préférence de tels ensembles destinés à supporter des moteurs de grands diamètres, à double flux. Un exemple de ce type d'ensemble est par exemple divulgué dans le document FR 2 887 522.

L'invention s'applique en particulier aux avions commerciaux.

### ETAT DE LA TECHNIQUE ANTERIEURE

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mât d'accrochage. Les mâts d'accrochage habituellement employés présentent une structure primaire, également dite structure rigide, souvent réalisée sous forme d'un caisson, c'est-à-dire réalisée par l'assemblage de longerons inférieurs et supérieurs raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de voilure. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment ceux liés aux cas de défaillances tels que la perte de pâles (FBO, de l'anglais « *Fan Blade Out* »), effacement du train avant, atterrissage dynamique, etc.

Dans les mâts d'accrochage connus de l'art antérieur tel que dans le document FR 2 887 522, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé. Pour les moteurs à double flux tels que les turboréacteurs, l'important taux de dilution recherché conduit à obtenir un encombrement particulièrement élevé, puisqu'une augmentation du taux de dilution engendre inéluctablement une hausse du diamètre du moteur, et plus particulièrement une hausse du diamètre de son carter de soufflante.

Par conséquent, avec une garde au sol qui est déterminée de manière à rester acceptable du point de vue sécuritaire, l'espace restant entre l'élément de voilure et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure et la structure primaire. En effet, ces derniers doivent présenter des dimensions suffisantes pour apporter une résistance mécanique capable de supporter le passage des efforts du moteur vers l'élément de voilure, avec une faible déformée sous contrainte dans le but de ne pas dégrader les performances aérodynamiques du système propulsif.

Dans l'art antérieur, de multiples solutions ont été proposées pour rapprocher le moteur au plus près de l'élément de voilure auquel il est suspendu, et ce dans le but de conserver la garde au sol requise.

Néanmoins, ces solutions doivent être améliorées en permanence pour s'adapter aux diamètres de carter de soufflante toujours plus élevés, retenus pour satisfaire les besoins en taux de dilution.

Le document EP 1535 837 A1 décrit une solution conforme à l'art antérieur, de fixation d'un mât d'accrochage d'un moteur sous une aile d'aéronef.

### EXPOSÉ DE L'INVENTION

Pour répondre à ce besoin d'amélioration, l'invention a pour objet un ensemble pour aéronef tel que défini dans la revendication 1.

Grâce à l'agencement proposé, la structure primaire du mât peut être approchée au plus près de l'aile. En effet, l'emploi d'une ligne de boulons contraste avec les solutions de l'art antérieur dans lesquelles les attaches présentent habituellement des éléments d'encombrement non négligeable agencés dans la direction verticale, entre le mât et l'aile. Il en résulte avantageusement un gain d'encombrement dans cette même direction, puisque le mât peut être couplé au plus près de l'aile. De plus, la fixation par ligne de boulons permet un transfert d'efforts plus direct entre le caisson de voilure et la structure primaire du mât. Cela conduit à une réduction des moments secondaires résultant des déports créés par les attaches conventionnelles, qui mettent généralement en œuvre des chapes et des manilles ou biellettes. Grâce à cette réduction des moments secondaires, certains renforcements structuraux initialement prévus au sein de la voilure et du mât pour faire face à ces moments, peuvent être réduits ou supprimés. Il en découle avantageusement un gain supplémentaire d'encombrement et de masse dans la direction verticale, propice à l'implantation d'un moteur de plus grand diamètre, et/ou à une implantation plus haute du moteur pour augmenter la garde au sol.

L'invention prévoit de préférence au moins l'une des caractéristiques optionnelles revendiquées dans les revendications dépendantes.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un aéronef comprenant un ensemble selon l'invention ;
- la figure 2 est une vue de côté agrandie de celle de la figure 1, montrant l'ensemble selon l'invention avec son moteur associé ;
- la figure 3 est une vue partiellement éclatée en perspective d'un mode de réalisation préféré d'un premier exemple de réalisation de l'ensemble montré sur la figure précédente ;
- la figure 4 est une vue schématique de dessus de l'ensemble montré sur la figure 3 ;
- la figure 5 est en vue en coupe prise le long de la ligne V-V de la figure 4 ;
- la figure 6 est une vue en perspective partiellement éclatée d'une partie de l'ensemble montré sur les figures 3 à 5 ;
- la figure 7 est une autre vue en perspective d'une partie de l'ensemble montré sur les figures 3 à 6, montrant plus précisément l'attache voilure arrière ;
- la figure 8 est une vue de derrière de celle montrée sur la figure précédente ;
- la figure 9 est une vue en perspective similaire à celle de la figure 6, montrant schématiquement la reprise des efforts réalisée par les attaches voilure avant et arrière ;
- la figure 10 représente une vue en perspective d'une partie d'un ensemble se présentant selon un autre mode de réalisation préféré du premier exemple de réalisation de l'invention ;
- la figure 10a est une vue en perspective représentant une partie de l'ensemble montré sur la figure précédente, selon un autre angle de vue ;
- la figure 11 est une vue en perspective d'un élément de l'ensemble montré sur les figures 10 et 10a ;
- la figure 12 est une vue en coupe prise le long de la ligne XII-XII de la figure 10;
- la figure 13 est une vue, selon une première perspective, d'un mode de réalisation préféré d'un deuxième exemple de réalisation de l'ensemble montré sur la figure 2 ;
- la figure 14 est une vue partiellement éclatée, selon la première perspective, du mode de réalisation préféré illustré par la figure 13 ;
- la figure 15 es une vue de détail, selon une perspective légèrement différente de la première perspective, d'un mât montré sur la figure 14 ;
- la figure 16 est une vue, selon une deuxième perspective, du mode de réalisation préféré illustré par la figure 13 ;
- la figure 17 est une vue partiellement éclatée, selon la deuxième perspective, du mode de réalisation préféré illustré par la figure 16 ; et
- la figure 18 est une vue de détail, en perspective, de la partie supérieure de la figure 17.

### EXPOSÉ DÉTAILLÉ DE MODES DE RÉALISATION PRÉFÉRÉS

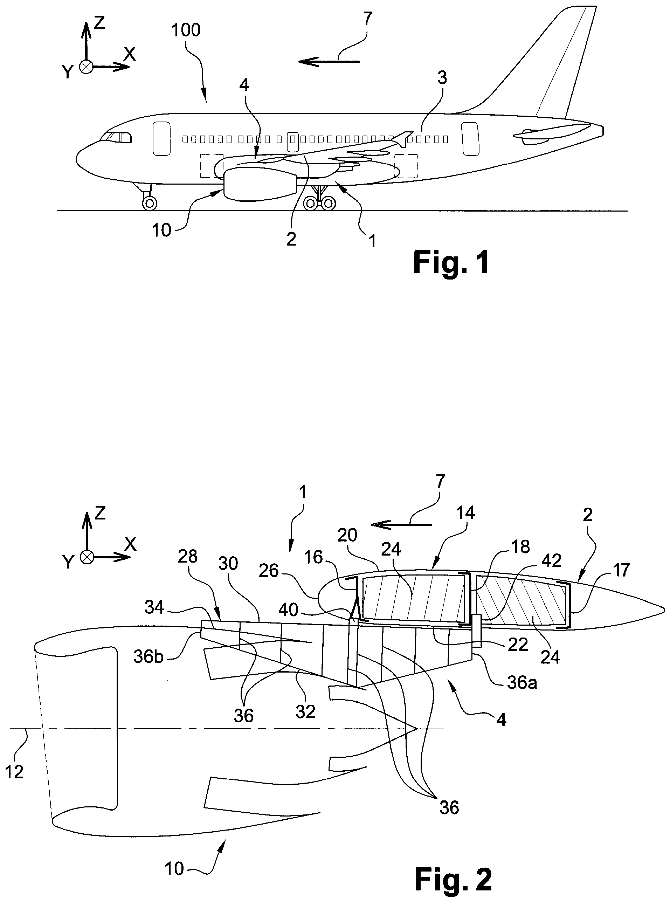

En référence à la figure 1, il est représenté un aéronef 100 comprenant un fuselage 3 sur lequel sont fixés deux ailes 2 (une seule visible sur la figure 1), chaque aile faisant partie intégrante d'un ensemble 1 selon l'invention. L'ensemble 1 supporte un moteur 10 à double flux et à double corps, tel qu'un turboréacteur. En effet, cet ensemble 1 comprend non seulement l'aile 2, mais également un mât 4 d'accrochage du moteur 10 interposé entre l'aile 2 et ce moteur.

Dans toute la description qui va suivre, par convention, la direction X correspond à la direction longitudinale de l'ensemble 1 qui est également assimilable à la direction longitudinale du moteur 10, cette direction X étant parallèle à un axe longitudinal de ce moteur. D'autre part, la direction Y correspond à la direction orientée transversalement par rapport à l'ensemble 1, également assimilable à la direction transversale du moteur. Enfin, la direction Z correspond à la direction verticale ou de la hauteur, ces trois directions X, Y et Z étant orthogonales entre elles. Par conséquent, le moteur 10 est suspendu sous l'ensemble 1, dans la direction Z.

D'autre part, les termes « avant » et « arrière » sont à considérer par rapport à une direction d'avancement de l'aéronef rencontrée suite à la poussée exercée par les moteurs 10, cette direction étant représentée schématiquement par la flèche 7. En revanche, les termes « amont » et « aval » sont à considérer selon une direction principale d'écoulement des gaz à travers le moteur, direction qui est opposée à la direction 7.

En référence à présent à la figure 2, il est représenté l'ensemble 1 sous lequel est suspendu le moteur 10, d'axe longitudinal 12. L'aile 2 de cet ensemble 1 présente une conception classique en ce sens qu'elle comporte un caisson de voilure 14 s'étendant selon une direction d'envergure de l'aile. Le caisson de voilure 14 est formé par un longeron avant 16, un longeron arrière 17, un longeron intermédiaire 18, une peau supérieure d'extrados 20 ainsi qu'une peau inférieure d'intrados 22. Les trois longerons 16, 17, 18 sont de préférence sensiblement parallèles, s'étendant selon la direction d'envergure et espacés les uns des autres selon une direction de la corde de l'aile. Des nervures intérieures de renfort 24 sensiblement longitudinales sont logées à l'intérieur du caisson de voilure 14, en étant fixés à chacun des quatre éléments de caisson 16, 18, 20, 22, par rivets, boulons ou éléments similaires. Les nervures 24 pourraient également traverser le longeron intermédiaire 18 pour s'étendre vers l'arrière jusqu'au longeron arrière 17, ou bien d'autres nervures 24 pourraient être agencées entre le longeron intermédiaire 18 et le longeron arrière 17. En outre, à l'avant du caisson de voilure 14, l'aile 2 comporte un capotage 26 formant le bord d'attaque de l'aile.

L'autre élément de l'ensemble 1, le mât d'accrochage 4, comprend une structure primaire 28 en forme de caisson. Les autres éléments constitutifs non-représentés de ce mât 4, du type structure secondaire assurant la ségrégation et le maintien des systèmes tout en supportant des carénages aérodynamiques, sont des éléments classiques similaires à ceux rencontrés dans l'art antérieur. Par conséquent, il n'en sera fait aucune description détaillée.

La structure primaire 28, ou structure rigide, permet la transmission au caisson de voilure 14 des efforts statiques et dynamiques engendrés par le moteur 10. Le caisson qu'elle forme s'étend sur toute la longueur de cette structure primaire, selon la direction X. Il présente une conception classique, à savoir qu'il est délimité vers le haut par un longeron supérieur 30, vers le bas par un longeron inférieur 32, et latéralement par des panneaux latéraux 34. Comme cela est visible sur la figure 2, le longeron supérieur 30 se situe au moins en partie sous le caisson de voilure 14. A cet égard, il est noté que chacun des éléments précités 30, 32, 34 peut être réalisé d'une seule pièce, ou par l'assemblage de plusieurs pièces distinctes. De plus, une même pièce peut constituer tout ou partie de plusieurs de ces éléments 30, 32, 34.

En outre, le caisson de mât 28 est équipé de nervures transversales de renfort, de préférence agencées sensiblement dans des plans YZ et réparties selon la direction X. Il s'agit de nervures transversales intérieures 36, d'une nervure transversale de renfort 36a fermant l'arrière du caisson de mât 28, dite nervure de fermeture arrière, ainsi que d'une nervure transversale de renfort 36b fermant l'avant du caisson, dite nervure de fermeture avant.

Le caisson de mât 28 présente une section transversale YZ en forme générale de carré ou de rectangle, de dimension évolutive le long de la direction X. De préférence, cette section transversale se rétrécit à partir d'une portion médiane, en allant vers l'avant et vers l'arrière.

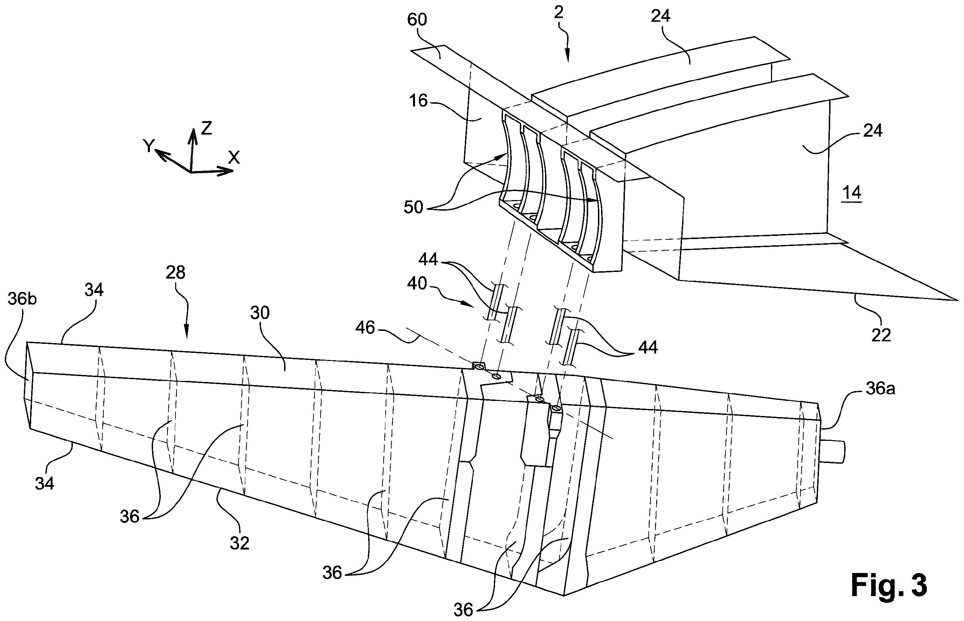

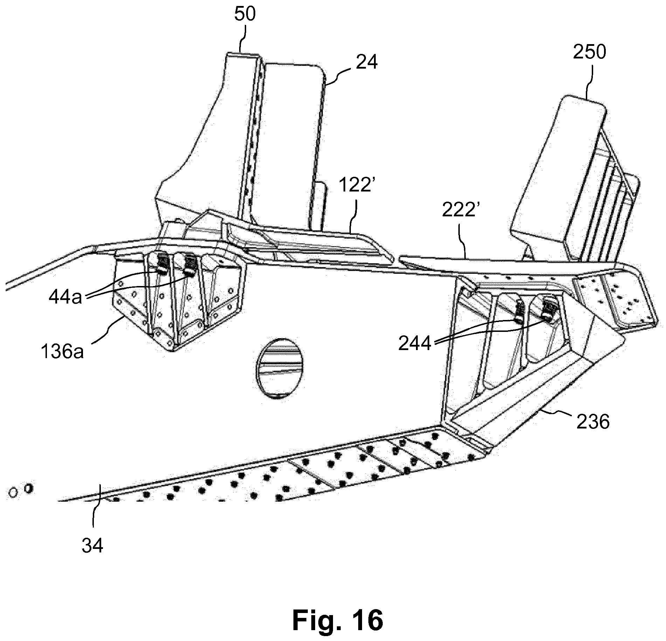

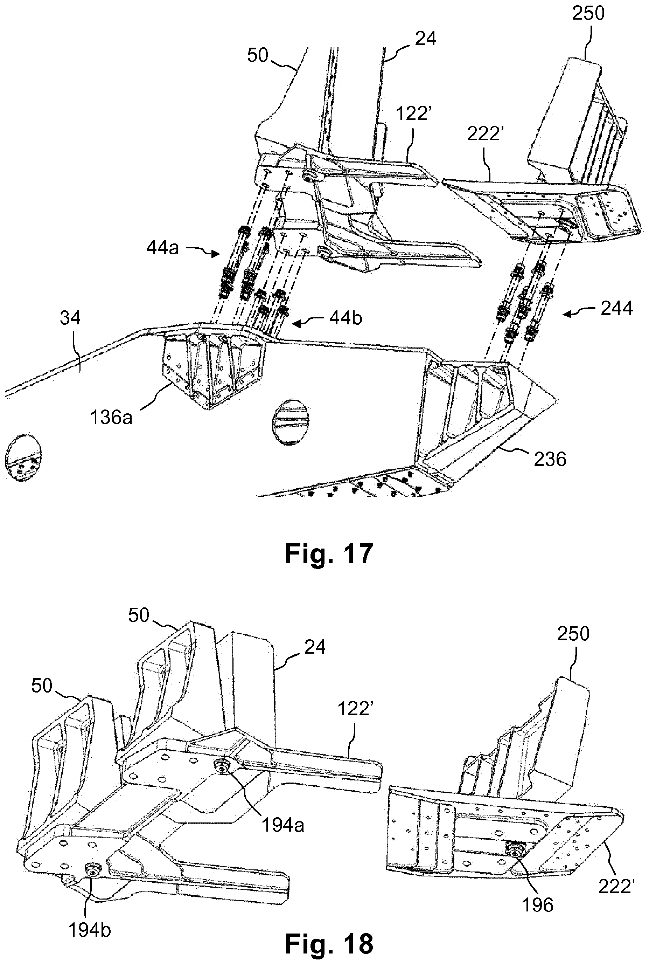

La fixation du moteur 10 sur le caisson de mât 28 s'effectue d'une manière conventionnelle, qui ne sera pas détaillée dans le cadre de cette demande de brevet. Elle est réalisée par des attaches moteur classiques, connues de l'homme du métier. En revanche, l'une des particularités de l'invention réside dans la conception des moyens de fixation du caisson de mât 28 sur le caisson de voilure 14, ces moyens étant ici constitués par deux attaches voilure 40, 42 qui vont à présent être décrites en référence aux figures 3 à 18.

Tout d'abord en référence aux figures 3 à 6, illustrant un premier exemple de réalisation de l'invention, il est représenté une première variante de réalisation de l'attache voilure avant 40 qui est ici constituée d'une ligne de boulons. Les boulons 44 sont orientés sensiblement selon la direction Z, et espacés les uns des autres le long d'une ligne fictive 46 qui est parallèle au longeron avant 16 du caisson de voilure 14.

Chaque boulon 44 traverse tout d'abord une ferrure 50 fixée sur le longeron avant 16 du caisson de voilure 14. Plus précisément, la ferrure 50 est fixée en dehors du caisson 14 et à l'avant de ce dernier, dans la continuité longitudinale de l'une des nervures intérieures de renfort 24 du caisson de voilure.

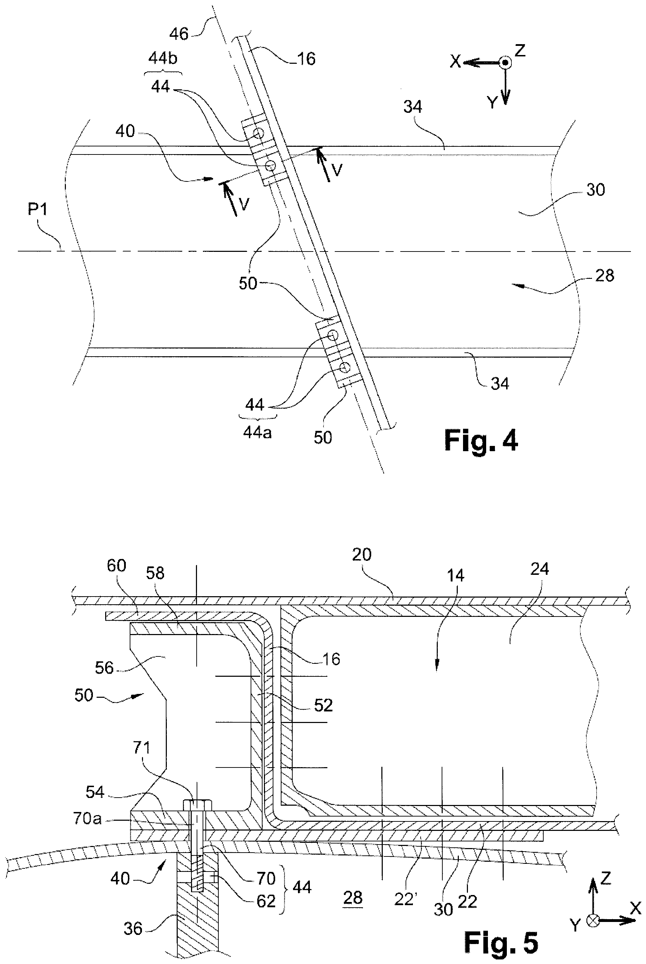

Cette ferrure 50 peut prendre différentes formes, comme celle d'une cornière. De préférence, elle comporte une première platine de fixation 52 qui est parallèle au longeron avant 16 et fixée sur ce dernier à l'aide de boulons (non représentés). Elle comprend également une seconde platine de fixation 54 coopérant avec au moins l'un des boulons 44, et préférentiellement un seul. Cette seconde platine 54 est sensiblement parallèle au longeron supérieur 30 du caisson de mât 28, donc sensiblement orthogonale à la première platine 52 comme cela est visible sur la figure 5. En outre, la ferrure 50 comporte deux flancs latéraux 56 solidaires des première et seconde platines de fixation 52, 54. Enfin, la ferrure 50 peut comprendre une platine supérieure 58 sensiblement parallèle à la seconde platine 54 et fixée par boulons à une extension longitudinale 60 du longeron avant 16. Les platines 52, 54, 58 et les deux flancs latéraux 56 sont de préférence réalisés d'un seul tenant, par exemple par usinage d'un bloc de matière.

Ce sont plusieurs ferrures 50 qui se succèdent le long du longeron avant 16, chacune d'elles étant associée à un unique boulon traversant sa seconde platine 54.

Dans un mode de réalisation préféré, un doubleur 22' est fixé sous la peau inférieure 22, au droit de l'attache voilure avant 40 en étant traversé par chaque boulon 44 (le doubleur 22' n'est pas représenté sur la figure 3). Cette fixation s'effectue par boulons, rivets ou éléments similaires. Le doubleur 22' s'étend vers l'avant au-delà du longeron avant 16, sous la ferrure 50, de préférence sans être directement fixé sur celle-ci. Il prend la forme d'une peau plaquée contre la peau inférieure 22 du caisson de voilure. La fonction de ce doubleur 22' est de drainer/distribuer les efforts de cisaillement contenus dans le plan XY dans une grande partie de la peau inférieure 22.

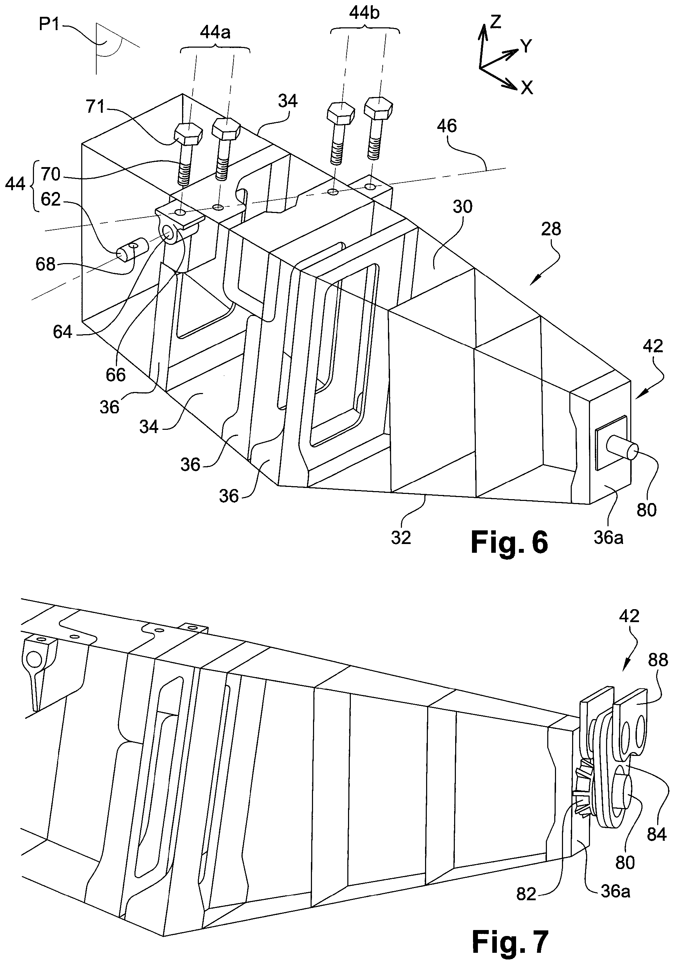

Dans cette première variante de réalisation, chaque boulon 44 traverse enfin la partie supérieure d'une pièce structurelle du mât correspondant à l'une des nervures transversales intérieures de renfort 36 du caisson de mât 28. Pour ce faire, la partie supérieure des nervures concernées 36 est préférentiellement renforcée, en présentant des parties en saillie extérieurement par rapport au caisson, dans les directions Y et/ou Z. Ces renforcements sont réalisés d'une seule pièce avec la nervure, ou bien sont rapportés fixement sur celle-ci. Parmi les renforcements envisagés, certains situés à l'extérieur du caisson de mât 28 permettent de loger aisément un écrou à barillet 62 (de l'anglais « *barrel nut* ») faisant partie intégrante d'un boulon 44. En effet, comme cela est le mieux visible sur la figure 6, l'écrou à barillet 62 peut facilement être inséré dans un orifice 64 d'un renforcement de nervure 66 situé en dehors du caisson. Pour rappel, un écrou à barillet est d'une façon générale un écrou qui présente une surface extérieure cylindrique dont l'axe est perpendiculaire à l'axe du trou taraudé 68 qui le traverse. Un écrou à barillet peut être réalisé, selon le cas, en une ou deux pièces. Ce type d'écrou est également dénommé écrou à canon, ou encore écrou à manchon. Il est préférentiellement mis en œuvre pour chacun des boulons 44. D'autres types d'écrous peuvent néanmoins être utilisés, comme des écrous classiques de forme hexagonale, sans sortir du cadre de l'invention.

Cet écrou 62 coopère avec un élément 70 fileté en son embout, de façon à former ensemble le boulon 44. L'élément 70 fileté en son embout comporte également un fût lisse 70a dans son prolongement ainsi qu'une tête 71 qui lui est solidaire, ou rapportée.

La partie du fût lisse 70a est ajustée serré dans les pièces qu'il traverse, de manière à ce que chaque boulon 44 puisse assurer non seulement la reprise des efforts s'exerçant selon la direction Z, mais également des efforts s'exerçant selon les directions X et Y. Les pièces traversées sont, successivement selon la direction Z, la seconde platine 54 de la ferrure 50 logée dans l'aile, le doubleur 22' fixé sur la peau inférieure 22 de la voilure, le longeron supérieur 30 du caisson de mât 28 et la nervure intérieure 36. Cependant, la nervure 36 peut présenter un renforcement qui se situe en dehors ou dans le plan du longeron supérieur 30 comme cela a été représenté sur la figure 6, de sorte que l'élément fileté 70 traverse directement cette nervure renforcée 36 après sa sortie du doubleur 22' fixé sur la peau inférieure 22 de la voilure, sans traverser le longeron supérieur 30.

Pour s'assurer que les efforts de cisaillement dans les directions X et Y transitent essentiellement par la peau inférieure 22, le fût lisse 70a de chaque boulon 44 peut traverser de façon ajustée uniquement le doubleur 22', et non la seconde platine 54.

Il est noté que le long de la ligne de boulons, l'écartement vertical entre le caisson de voilure 14 et le longeron supérieur 30 du caisson de mât 28 peut être évolutif. Pour faire face à cette différence d'écartement vertical, les ferrures 50 peuvent présenter des hauteurs différentes en fonction de leur position le long de la ligne de boulons, comme cela a été schématisé sur la figure 3. Alternativement, les nervures 36 pourraient présenter une hauteur en saillie variable pour répondre à cette problématique, ou encore le doubleur 22 pourrait être remplacé par une cale d'épaisseur progressive, comme cela sera présenté ci-après. Bien évidemment, il serait également possible de combiner certaines ou l'ensemble de ces solutions visant au rattrapage de jeu vertical entre les deux caissons 14, 28.

Dans le mode de réalisation préféré qui est décrit, il est prévu quatre ferrures 50 chacune associée à l'un des boulons 44. Ces derniers sont alors répartis en deux groupes, à savoir un premier groupe 44a de deux boulons situés d'un côté d'un plan vertical et longitudinal médian P1 de l'ensemble 1, et un second groupe 44b de deux boulons situés de l'autre côté de ce plan médian P1. Les boulons 44 du premier groupe 44a traversent tous les deux une même première nervure transversale 36, tandis que les boulons 44 du second groupe 44b traversent tous les deux une même seconde nervure transversale 36, de préférence directement consécutive à la première nervure dans la direction X.

De préférence, une nervure 24 est associée à chacun des deux groupes précités. Par conséquent, chacune de ces deux nervures 24, prévues à l'intérieur du caisson de voilure 14 entre le longeron intermédiaire 18 et le longeron avant 16, coopère avec deux ferrures 50.

Il faut également noter, en référence plus spécifiquement à la figure 4, que les deux boulons 44 de chaque groupe sont disposés sensiblement symétriquement par rapport au panneau latéral 34 associé à ce groupe. A cet égard, il est noté que chaque panneau latéral 34 se situe sensiblement dans un même plan que l'âme de la nervure de caisson de voilure 24 associée au groupe de boulons.

En référence à présent aux figures 6 à 8, il va être décrit une première variante de réalisation de l'attache voilure arrière 42. Celle-ci est agencée au niveau de la nervure de fermeture arrière 36a. Elle comporte une attache dite « spigot » formée à l'aide d'un pion de cisaillement agencé sensiblement selon la direction X. Ce pion de cisaillement 80 fait saillie vers l'arrière à partir de la nervure de fermeture 36a, en étant porté par un renforcement 82 solidaire de cette ferrure 36a. Il traverse une manille 84 de forme triangulaire, qui est également traversée par deux autres axes longitudinaux 86 qui traversent par ailleurs une chape 88 solidaire de la peau 22 du caisson de voilure.

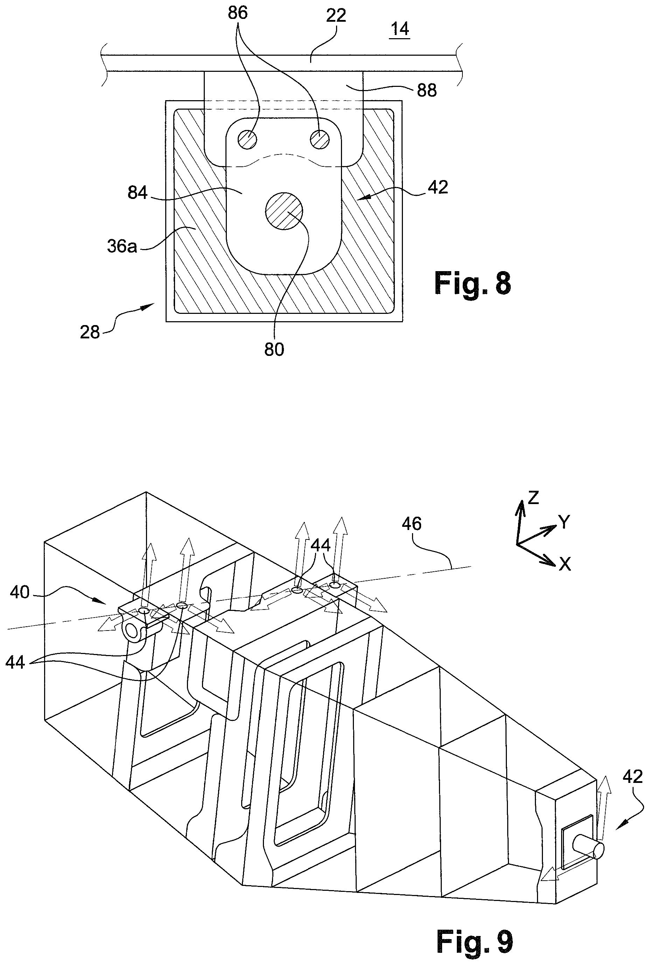

En référence à présent à la figure 9, il est montré la manière dont les deux attaches voilure 40, 42 assurent la reprise des efforts. Comme indiqué précédemment, chaque boulon 44 de l'attache voilure avant 40 reprend des efforts selon les trois directions X, Y, Z, tandis que l'attache voilure arrière 42 reprend des efforts selon les directions Y et Z. Cette configuration présente tout d'abord l'avantage d'engendrer un faible niveau d'hyperstaticité pour ces moyens de fixation 40, 42, ce qui facilite l'assemblage de l'ensemble. De plus, la ligne de boulons 44 se comporte à la manière d'une seule ligne de rotation et permet ainsi de reprendre les efforts liés au moment selon la direction Y conjointement avec l'attache arrière 42. L'important espacement entre ces deux attaches 40, 42 permet ainsi de reprendre aisément ces efforts liés au moment selon la direction Y, sans introduire d'efforts d'intensité trop élevée localement dans les caissons 14, 28.

De plus, en cas d'atterrissage ou de crash avec effacement des trains d'atterrissage, la ligne de boulons 44 peut parfaitement remplir la fonction désirée de fusible, de manière à provoquer un détachement du moteur via une rupture de cette ligne de boulons.

Enfin, l'emploi d'une ligne de boulons 44 réduit l'encombrement des moyens de fixation dans la direction verticale, le mât pouvant alors être couplé au plus près de l'aile. Cela permet aussi un transfert d'efforts plus direct entre le caisson de voilure et le caisson de mât, et grâce à la réduction des moments secondaires qui en découle, certains renforcements structuraux peuvent être réduits ou supprimés dans l'aile et dans le mât. L'implantation d'un moteur de plus grand diamètre s'en trouve facilitée.

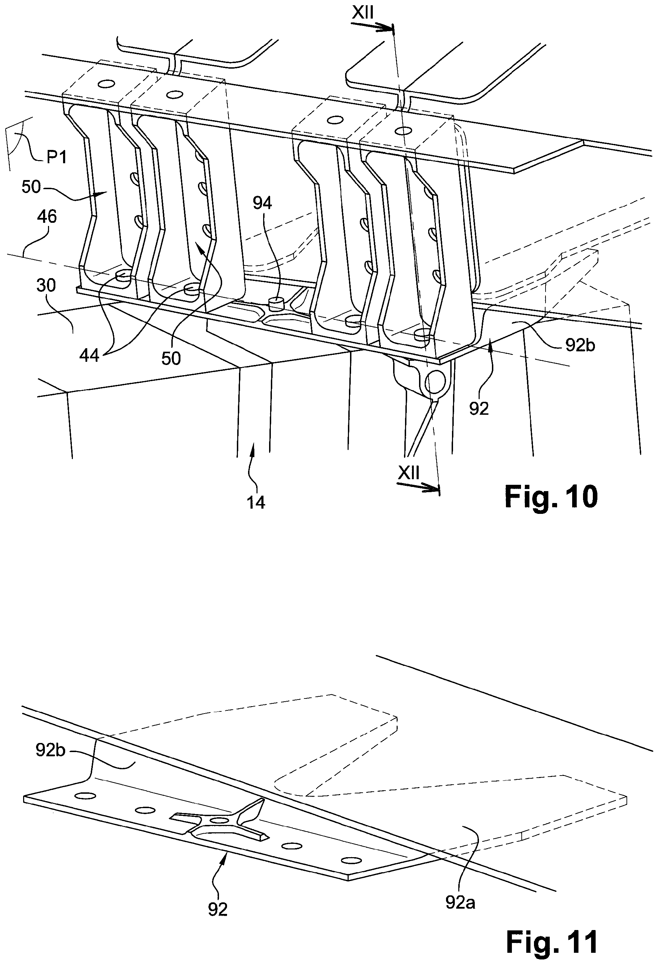

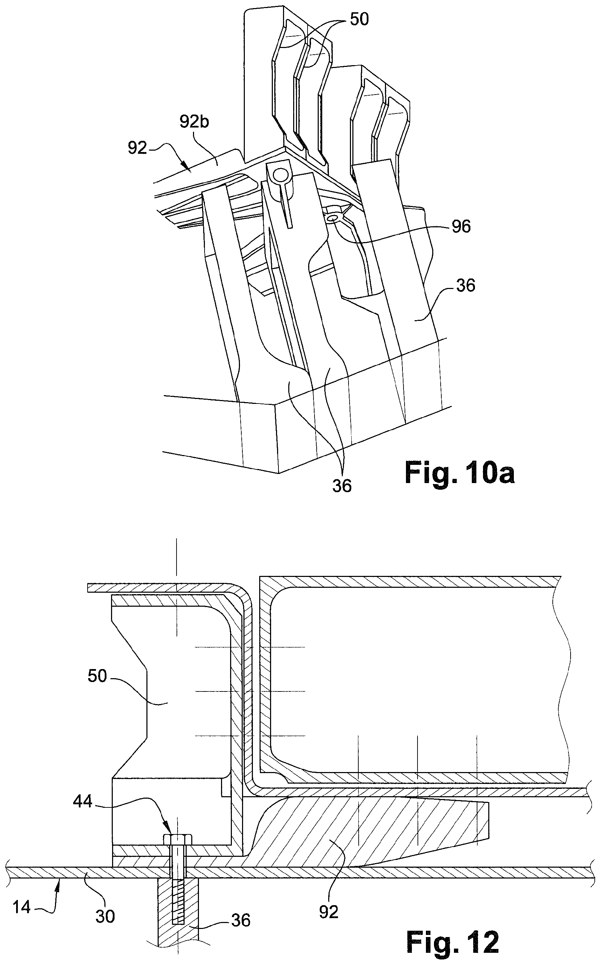

Selon un autre mode de réalisation représenté sur les figures 10 à 12, il est prévu une cale 92 de rattrapage de jeu vertical entre les ferrures 50 de l'aile et le caisson de mât 24. Cette cale 92, qui remplace alors le doubleur 22', présente une épaisseur différente dans sa partie 92a située sous le premier groupe de boulons et dans sa partie 92b située sous le second groupe de boulons, car le jeu vertical diffère à ces endroits. Cette cale 92 est ainsi traversée en des épaisseurs différentes par chacun des boulons 44, et se trouve plaquée entre les ferrures 50 et le longeron supérieur 30 du caisson de mât 28.

Enfin, il est noté qu'en alternative à la solution des boulons 44 reprenant chacun des efforts selon les trois directions X, Y et Z, ces boulons pourraient ne pas être ajustés serrés et reprendre des efforts uniquement selon la direction Z. Dans ce cas, l'attache voilure avant 40 pourrait être complétée par un « spigot », à savoir un pion de cisaillement 94 représenté sur la figure 10, orienté sensiblement selon la direction Z de façon à assurer la reprise des efforts selon les directions X et Y. Ce pion 94, d'axe interceptant la ligne 46, coopère de préférence avec la cale 92 comme montré sur la figure 10, ainsi qu'avec une ferrure de renfort 96 montrée sur la figure 10a. Cette ferrure de renfort 96 relie les deux nervures 36 du caisson de mât qui coopèrent avec les boulons 44, de façon à permettre au pion 94 d'être centré en s'intégrant dans le plan médian P1.

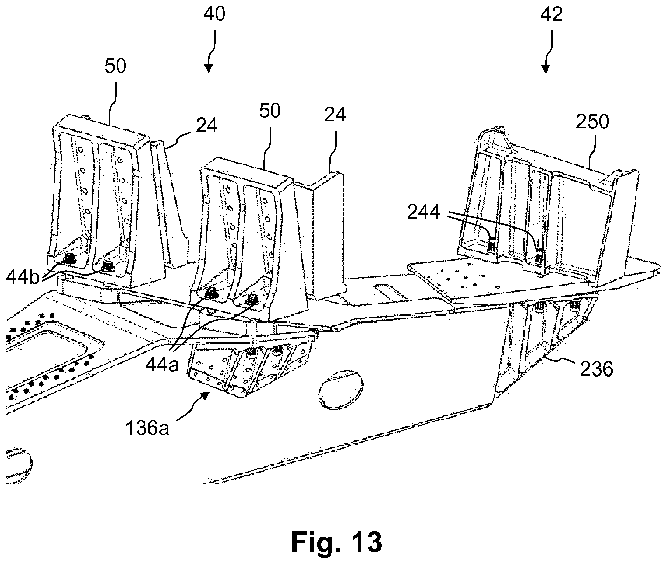

En référence aux figures 13 à 18, illustrant un deuxième exemple de réalisation de l'invention, il est représenté une deuxième variante de réalisation de l'attache voilure avant 40. Comme dans la première variante de réalisation, l'attache voilure avant 40 comprend au moins une ligne de boulons. Ces boulons 44a, 44b sont orientés sensiblement selon la direction Z, et espacés les uns des autres le long de lignes fictives 146a, 146b, 146c, 146d qui sont parallèles ou sensiblement parallèles entre elles.

Chaque boulon 44a, 44b traverse tout d'abord une ferrure 50 fixée sur le longeron avant 16 du caisson de voilure 14. Plus précisément, la ferrure 50 est fixée en dehors du caisson 14 et à l'avant de ce dernier, dans la continuité longitudinale de l'une des nervures intérieures de renfort 24 du caisson de voilure. Cette ferrure 50 est similaire à celle décrite en référence aux figures 3 à 6 et par conséquent elle ne sera pas décrite davantage.

Dans un mode de réalisation préféré, un doubleur 122' est fixé sous la peau inférieure d'intrados 22 (non représentée sur les figures), au droit de l'attache voilure avant 40 en étant traversé par chaque boulon 44a, 44b.Dans cette deuxième variante de réalisation, chaque boulon 44a, 44b traverse enfin la partie supérieure d'une pièce structurelle du mât correspondant à un rebord supérieur 136a, 136b d'un panneau latéral 34 du mât 4. Dans une première alternative, ce rebord supérieur correspond à une partie du panneau latéral 34 repliée de façon sensiblement perpendiculaire au reste du panneau latéral 34, de telle façon que cette partie repliée est située dans le plan XY. Dans une deuxième alternative, ce rebord supérieur correspond à au moins une pièce rapportée solidaire du panneau latéral 34. De façon préférée, comme représenté sur les figures 13 à 18, cette pièce rapportée est une ferrure 136a, 136b fixée solidaire du panneau latéral 34. Une ferrure 136a est fixée solidaire du panneau latéral 34 visible sur les figures. Une autre ferrure 136b est fixée solidaire de l'autre panneau latéral du mât 4. Pour des raisons d'angle de vue des figures, cette autre ferrure 136b, ainsi que l'autre panneau latéral, ne sont pas visibles sur les figures. De façon préférée, chaque ferrure est fixée solidaire d'un des panneaux latéraux 34, contre la face externe dudit panneau latéral (le terme face externe désignant ici la face du panneau latéral orientée vers l'extérieur du mât). Les deux ferrures 136a et 136b sont ainsi éloignées le plus possible l'une de l'autre, ce qui présente l'avantage pour la fixation 40 de présenter une plus grande résistance à des efforts liés à des moments selon la direction Y.

De façon préférée, comme représenté sur les figures, la forme du longeron supérieur 30 est telle qu'il recouvre les rebords supérieurs des panneaux latéraux 34, ces rebords supérieurs correspondant pas exemple aux ferrures 136a et 136b.

Dans la deuxième variante de réalisation, l'attache avant 40 comporte ainsi deux groupes de boulons : un premier groupe de boulons 44a traversant la ferrure 136a et un deuxième groupe de boulons 44b traversant la ferrure 136b. Les boulons de chaque groupe de boulons sont espacés les uns des autres le long d'au moins une ligne fictive 146a, 146b, 146c, 146d. De façon préférée, dans l'exemple représenté sur les figures 13 à 18, les boulons de chaque groupe de boulons sont espacés les uns des autres le long d'au moins deux lignes fictives 146a, 146b pour le deuxième groupe et 146c, 146d pour le premier groupe. Cette disposition selon plusieurs lignes permet d'augmenter le nombre de boulons, et par conséquent les efforts susceptibles d'être transmis par la fixation avant 40, pour un même encombrement latéral (selon l'axe Y) du mât. Les lignes 146c du premier groupe de boulons et 146a du deuxième groupe de boulons ne sont pas nécessairement alignées. De même, les lignes 146d du premier groupe de boulons et 146b du deuxième groupe de boulons ne sont pas nécessairement alignées. Toutefois, de préférence, ces différentes lignes sont parallèles ou sensiblement parallèles entre elles. Pour la clarté de la description, il est précisé que dans l'ensemble de la description, deux lignes sont considérées sensiblement parallèles si elles forment un angle entre elles inférieur à 5°, de préférence inférieur à 3°. De préférence, les différentes lignes 146a, 146b, 146c, 146d sont parallèles ou sensiblement parallèles au longeron avant 16 du caisson de voilure 14. De façon préférée, bien que non obligatoirement, les lignes 146a et 146b sont alignées, de même que les lignes 146b et 146d.

Toutefois, dans des cas particuliers, notamment lorsqu'il existe des contraintes d'installation du fait de la configuration d'éléments structuraux de l'aile et/ou du mât, certaines lignes de boulons peuvent ne pas être parallèles ou sensiblement parallèles au longeron avant 16 du caisson de voilure 14.

Sans sortir du cadre de l'invention, dans un mode particulier de réalisation, le rebord supérieur d'un panneau latéral est situé pour partie à l'intérieur du mât 4 et pour partie à l'extérieur du mât par rapport à ce panneau latéral. Le rebord supérieur s'étend ainsi de part et d'autre de la partie verticale (aussi appelée âme verticale) du panneau latéral. La ligne de boulons comprend au moins un boulon traversant la partie du rebord supérieur située à l'intérieur du mât et au moins un boulon traversant la partie du rebord supérieur située à l'extérieur du mât. Chaque partie du rebord supérieur peut correspondre à une partie du panneau latéral repliée de façon perpendiculaire au reste du panneau latéral ou à une ferrure fixée solidaire du panneau latéral. Ainsi, selon une première alternative, les deux parties du rebord supérieur correspondent à des parties repliées du panneau latéral, dont la partie supérieure présente alors une forme en T. Selon une deuxième alternative, ces deux parties du rebord supérieur du panneau latéral correspondent à des ferrures fixées solidaires du panneau latéral, l'une sur une face interne, l'autre sur une face externe du panneau latéral. Selon une troisième alternative, l'une des parties du rebord supérieur correspond à une partie du panneau latéral repliée de façon perpendiculaire au reste du panneau latéral et l'autre partie correspond à une ferrure fixée solidaire du panneau latéral.

Comme dans la première variante de réalisation, l'attache avant 40 peut être complétée par un « spigot », à savoir un pion de cisaillement. Ce pion de cisaillement est orienté sensiblement selon la direction Z de façon à assurer la reprise des efforts selon les directions X et Y. Selon une première alternative, un seul pion de cisaillement 94 est mis en œuvre, comme dans la première variante. Ce pion de cisaillement est alors situé entre les deux groupes de boulons 44a et 44b, par exemple sensiblement équidistant des deux panneaux latéraux 34 du mât. Selon une deuxième alternative représentée sur les figures 13 à 18, deux pions de cisaillement 194a et 194b sont mis en œuvre. Le premier pion de cisaillement 194a est situé à proximité du premier ensemble de boulons 44a et le deuxième pion de cisaillement 194b est situé à proximité du deuxième ensemble de boulons 44b. Le premier pion de cisaillement 194a coopère avec un alésage 190a pratiqué dans le longeron supérieur 30 et/ou dans la première ferrure 136a solidaire du panneau latéral 34. Le deuxième pion de cisaillement 194b coopère avec un alésage 190b pratiqué dans le longeron supérieur 30 et/ou dans la deuxième ferrure 136b solidaire de l'autre panneau latéral. La mise en œuvre des deux pions de cisaillement écartés l'un de l'autre selon la direction Y permet à la fixation 40 de présenter une plus grande résistance à des efforts liés à des moments selon la direction Y. Cette résistance est d'autant plus grande que les deux pions de cisaillement sont écartés l'un de l'autre.

Les figures 13 à 18 relatives au deuxième exemple de réalisation de l'invention illustrent également une deuxième variante de réalisation de l'attache arrière 42. Dans cette deuxième variante, l'attache voilure arrière 42 comporte un ensemble de boulons 244, chaque boulon traversant d'une part une pièce structurelle 236 du mât 4, et d'autre part une ferrure 250 solidaire de l'aile 2. Cette ferrure 250 est de préférence située à l'intérieur de l'aile, contre une peau inférieure d'intrados 22 (non représentée sur les figures 13 à 18 pour des raisons de clarté) de l'aile 2. La ferrure 250 est solidaire de l'aile. Elle est par exemple fixée entre deux nervures intérieures de renfort 24. Elle peut également être fixée sur le longeron intermédiaire 18 du caisson de voilure. De façon préférée, la pièce structurelle du mât correspond à une ferrure 236 fixée à une partie arrière du caisson de mât. Cette ferrure 236 est par exemple fixée à la nervure de fermeture arrière 36a fermant l'arrière du caisson de mât 28. Les boulons 244 sont orientés sensiblement selon la direction Z, et espacés les uns des autres le long de lignes fictives 246a, 246b. De préférence, ces lignes fictives sont sensiblement parallèles au longeron avant 16 du caisson de voilure 14. Ces boulons traversent la ferrure 250, la peau inférieure d'intrados 22 et la pièce structurelle du mât correspondant à la ferrure 236.

De façon alternative la pièce structurelle du mât peut correspondre à la nervure de fermeture arrière 36a et/ou à une nervure transversale de renfort 36 située à proximité de la nervure de fermeture arrière 36a. Selon une autre alternative, la pièce structurelle du mât peut correspondre à des rebords supérieurs des panneaux latéraux 34, ces rebords étant par exemple similaires aux deux ferrures 136a et 136b décrites en référence à la deuxième variante de l'attache avant 40.

Dans un mode de réalisation préféré, un doubleur 222' est fixé sous la peau inférieure 22, au droit de l'attache voilure arrière 42 en étant traversé par chaque boulon 244.

L'attache arrière conforme à la deuxième variante de réalisation présente la caractéristique d'avoir un niveau élevé d'hyperstaticité.

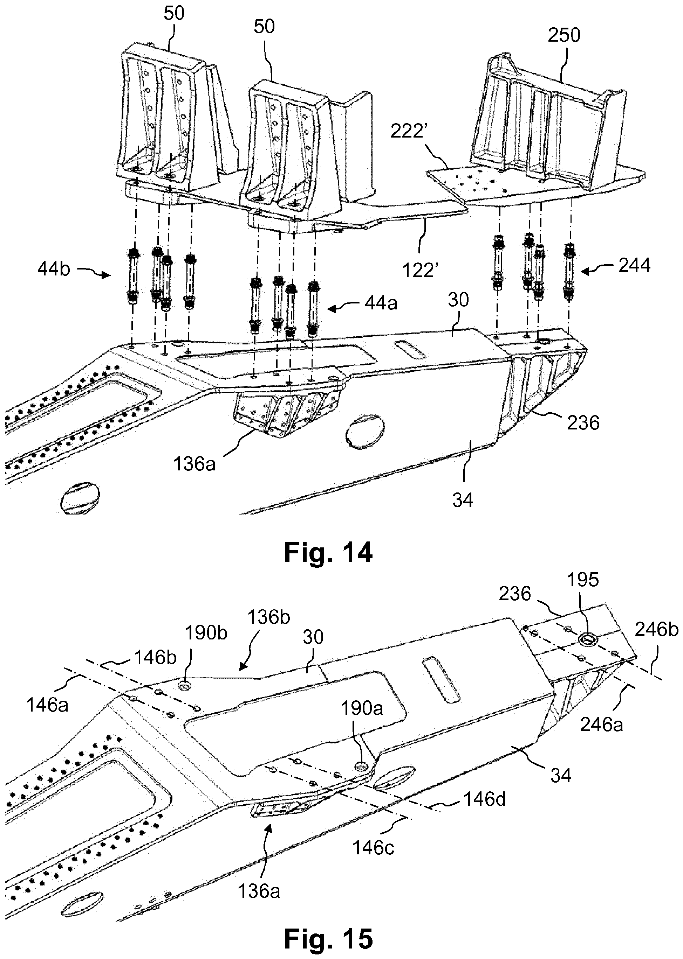

L'attache voilure arrière 42 peut également être complétée par un « spigot », à savoir un pion de cisaillement 196, orienté sensiblement selon la direction Z de façon à assurer la reprise des efforts selon les directions X et Y. Ce pion 196 coopère de préférence avec un alésage 195 de la ferrure 236 comme montré sur les figures 13 à 18. Dans l'exemple illustré sur la figure 15, son axe intercepte la ligne 246b. Le pion de cisaillement 196 est de préférence centré latéralement dans la ferrure 236, c'est-à-dire qu'il s'intègre dans le plan médian P1.

L'attache de voilure arrière 42 conforme à la deuxième version décrite ci-dessus peut aussi être combinée avec la première version de l'attache de voilure avant 40. L'attache de voilure arrière 42 conforme à la première version peut également être combinée avec la deuxième version de l'attache de voilure avant 40.

Bien entendu, diverses modifications peuvent être apportées par l'homme du métier à l'invention qui vient d'être décrite, uniquement à titre d'exemples non limitatifs. De plus, la ligne de boulons pourrait alternativement coopérer avec le longeron intermédiaire du caisson de voilure, sans sortir du cadre de l'invention.

## Revendications

1. Ensemble (1) pour aéronef comprenant :
- une aile d'aéronef (2) comprenant un caisson de voilure (14) en partie réalisé à l'aide d'un longeron avant (16) et d'un longeron intermédiaire (18) ;
- un mât (4) d'accrochage de moteur agencé sous l'aile (2), le mât comprenant une structure primaire en forme de caisson (28) présentant un longeron supérieur (30) s'étendant au moins en partie sous le caisson de voilure (14), et présentant également un longeron inférieur (32), des panneaux latéraux (34) ainsi que des nervures transversales de renfort (36, 36a, 36b) ; et
- des moyens de fixation (40, 42) de la structure primaire (28) du mât d'accrochage sur le caisson de voilure (14),
**caractérisé en ce que** lesdits moyens de fixation comprennent une ligne de boulons (44) le long de laquelle chaque boulon traverse d'une part une pièce structurelle (36, 136a, 136b) du mât (4), et d'autre part une ferrure (50) fixée sur l'un desdits longerons avant et intermédiaire (16, 18), et **en ce que** ladite pièce structurelle du mât correspond à l'une des nervures transversales de renfort (36, 36a, 36b) et la ligne de boulons (44) est parallèle à celui des longerons avant et intermédiaire (16, 18) sur lequel est fixée la ferrure (50).

2. Ensemble selon la revendication 1, **caractérisé en ce que** certains boulons (44) de la ligne de boulons traversent l'une desdites nervures transversales de renfort (36) de la structure primaire (28), et **en ce que** d'autres boulons (44) de cette ligne traversent une autre nervure transversale de renfort (36) de la structure primaire (28).

3. Ensemble selon l'une quelconque des revendications précédentes, **caractérisé en ce que** chaque ferrure (50) fixée sur l'un desdits longerons avant et intermédiaire (16, 18) du caisson de voilure est agencée en dehors de ce caisson (14).

4. Ensemble selon l'une quelconque des revendications précédentes, **caractérisé en ce que** chaque ferrure (50) fixée sur l'un desdits longerons avant et intermédiaire (16, 18) se situe dans la continuité longitudinale d'une nervure intérieure de renfort (24) du caisson de voilure, la nervure intérieure de renfort (24) étant fixée sur chacun desdits longerons avant et intermédiaire (16, 18) de ce caisson de voilure.

5. Ensemble selon l'une quelconque des revendications précédentes, **caractérisé en ce que** chaque ferrure (50) fixée sur l'un desdits longerons avant et intermédiaire (16, 18) présente au moins :
- une première platine (52) de fixation sur le longeron avant ou le longeron intermédiaire (16, 18) ;
- une seconde platine de fixation (54) coopérant avec au moins l'un desdits boulons (44) de la ligne de boulons, lesdites première et seconde platines de fixation (52, 54) étant sensiblement orthogonales entre elles ; et
- de préférence des flancs latéraux (56) solidaires desdites première et seconde platines de fixation (52, 54).

6. Ensemble selon l'une quelconque des revendications précédentes, **caractérisé en ce qu'**au moins un boulon (44) de la ligne de boulons est monté ajusté serré de façon à permettre la reprise des efforts s'exerçant selon une direction longitudinale (X) et selon une direction transversale (Y) de l'ensemble.

7. Ensemble selon l'une quelconque des revendications précédentes, **caractérisé en ce que** ladite ferrure (50) est fixée sur le longeron avant (16) du caisson de voilure (14).

8. Ensemble selon la revendication 7, **caractérisé en ce que** la ligne de boulons (44) constitue une attache voilure avant (40), ou **en ce que** ladite attache voilure avant (40) comporte de plus un pion de cisaillement (94) de reprise des efforts s'exerçant selon une direction longitudinale (X) et selon une direction transversale (Y) de l'ensemble, avec le pion de cisaillement (94) interceptant la ligne de boulons (44).

9. Ensemble selon la revendication 7, **caractérisé en ce que** la ligne de boulons (44) fait partie d'une attache voilure avant (40), et **en ce que** ladite attache voilure avant (40) comporte de plus deux pions de cisaillement (194a, 194b) de reprise des efforts s'exerçant selon une direction longitudinale (X) et selon une direction transversale (Y) de l'ensemble, les deux pions de cisaillement (194a, 194b) étant écartés l'un de l'autre selon la direction transversale (Y).

10. Ensemble selon l'une des revendications 7 à 9, **caractérisé en ce qu'**il comprend également une attache voilure arrière (42) agencée au niveau d'une nervure transversale de renfort (36a) fermant l'arrière de la structure primaire (28) en forme de caisson, et **en ce que** la structure primaire (28) est fixée sous le caisson de voilure (14) à l'aide exclusivement de l'attache voilure avant (40) et de l'attache voilure arrière (42).

11. Ensemble selon la revendication 10, **caractérisé en ce que** l'attache voilure arrière (42) comporte un pion de cisaillement (80) faisant saillie vers l'arrière à partir de la nervure transversale de renfort (36a) fermant l'arrière de la structure primaire (28), le pion de cisaillement (80) étant agencé sensiblement selon une direction longitudinale (X) de l'ensemble.

12. Ensemble selon la revendication 10 ou la revendication 11, **caractérisé en ce que** l'attache voilure arrière (42) comporte également au moins une manille (84) traversée par le pion de cisaillement (80).

13. Ensemble selon la revendication 10, **caractérisé en ce que** l'attache voilure arrière (42) comporte un ensemble de boulons (244), chaque boulon traversant d'une part une pièce structurelle (236) du mât (4), et d'autre part une ferrure (250) solidaire de l'aile (2).

14. Ensemble selon la revendication 13, **caractérisé en ce que** l'attache voilure arrière (42) comporte un pion de cisaillement (196) de reprise des efforts s'exerçant selon une direction longitudinale (X) et selon une direction transversale (Y) de l'ensemble.

15. Aéronef (100) comprenant au moins un ensemble (1) selon l'une quelconque des revendications précédentes.

## Patentansprüche

1. Einheit (1) für ein Luftfahrzeug, die enthält:
- einen Flugzeugflügel (2), der einen Tragflächenkasten (14) enthält, der zum Teil mit Hilfe eines vorderen Holms (16) und eines Zwischenholms (18) hergestellt wird;
- ein unter dem Flügel (2) angeordnetes Motoraufhängungssystem (4), wobei das System eine Primärstruktur in Form eines Kastens (28) enthält, der einen oberen Holm (30) aufweist, der sich zumindest zum Teil unter dem Tragflächenkasten (14) erstreckt, und ebenfalls einen unteren Holm (32), Seitenplatten (34) sowie Querverstärkungsrippen (36, 36a, 36b) aufweist; und
- Befestigungseinrichtungen (40, 42) der Primärstruktur (28) des Aufhängungssystems am Tragflächenkasten (14),
**dadurch gekennzeichnet, dass** die Befestigungseinrichtungen eine Reihe von Bolzen (44) enthalten, entlang der jeder Bolzen einerseits ein Strukturbauteil (36, 136a, 136b) des Systems (4) und andererseits einen Beschlag (50) durchquert, der an einem der vorderen und Zwischenholme (16, 18) befestigt ist, und dass das Strukturbauteil des Systems einer der Querverstärkungsrippen (36, 36a, 36b) entspricht, und die Reihe von Bolzen (44) parallel zu demjenigen der vorderen und Zwischenholme (16, 18) ist, an dem der Beschlag (50) befestigt ist.

2. Einheit nach Anspruch 1, **dadurch gekennzeichnet, dass** bestimmte Bolzen (44) der Reihe von Bolzen eine der Querverstärkungsrippen (36) der Primärstruktur (28) durchqueren, und dass andere Bolzen (44) dieser Reihe eine andere Querverstärkungsrippe (36) der Primärstruktur (28) durchqueren.

3. Einheit nach einem der vorhergehenden Ansprüche, **dadurch gekennzeichnet, dass** jeder an einem der vorderen und Zwischenholme (16, 18) des Tragflächenkastens befestigte Beschlag (50) außerhalb dieses Kastens (14) angeordnet ist.

4. Einheit nach einem der vorhergehenden Ansprüche, **dadurch gekennzeichnet, dass** jeder an einem dieser vorderen und Zwischenholme (16, 18) befestigte Beschlag (50) sich in der Längskontinuität einer inneren Verstärkungsrippe (24) des Tragflächenkastens befindet, wobei die innere Verstärkungsrippe (24) an jedem der vorderen und Zwischenholme (16, 18) dieses Tragflächenkastens befestigt ist.

5. Einheit nach einem der vorhergehenden Ansprüche, **dadurch gekennzeichnet, dass** jeder an einem der vorderen und Zwischenholme (16, 18) befestigte Beschlag (50) mindestens aufweist:
- eine erste Befestigungsplatte (52) am vorderen Holm oder am Zwischenholm (16, 18);
- eine zweite Befestigungsplatte (54), die mit mindestens einem der Bolzen (44) der Reihe von Bolzen zusammenwirkt, wobei die ersten und zweiten Befestigungsplatten (52, 54) im Wesentlichen orthogonal zueinander sind; und
- vorzugsweise Seitenflanken (56), die fest mit den ersten und zweiten Befestigungsplatten (52, 54) verbunden sind.

6. Einheit nach einem der vorhergehenden Ansprüche, **dadurch gekennzeichnet, dass** mindestens ein Bolzen (44) der Reihe von Bolzen passgenau eingespannt montiert wird, um die Aufnahme der Kräfte zu erlauben, die gemäß einer Längsrichtung (X) und gemäß einer Querrichtung (Y) der Einheit ausgeübt werden.

7. Einheit nach einem der vorhergehenden Ansprüche, **dadurch gekennzeichnet, dass** der Beschlag (50) am vorderen Holm (16) des Tragflächenkastens (14) befestigt wird.

8. Einheit nach Anspruch 7, **dadurch gekennzeichnet, dass** die Reihe von Bolzen (44) eine vordere Tragflächenhalterung (40) bildet, oder dass die vordere Tragflächenhalterung (40) außerdem einen Scherstift (94) zur Aufnahme der Kräfte aufweist, die gemäß einer Längsrichtung (X) und gemäß einer Querrichtung (Y) der Einheit ausgeübt werden, wobei der Scherstift (94) die Reihe von Bolzen (44) kreuzt.

9. Einheit nach Anspruch 7, **dadurch gekennzeichnet, dass** die Reihe von Bolzen (44) Teil einer vorderen Tragflächenhalterung (40) ist, und dass die vordere Tragflächenhalterung (40) zusätzlich zwei Scherstifte (194a, 194b) zur Aufnahme der gemäß einer Längsrichtung (X) und gemäß einer Querrichtung (Y) der Einheit ausgeübten Kräfte aufweist, wobei die zwei Scherstifte (194a, 194b) gemäß der Querrichtung (Y) zueinander beabstandet sind.

10. Einheit nach einem der Ansprüche 7 bis 9, **dadurch gekennzeichnet, dass** sie ebenfalls eine hintere Tragflächenhalterung (42) enthält, die im Bereich einer Querverstärkungsrippe (36a) angeordnet ist, die die Rückseite der kastenförmigen Primärstruktur (28) schließt, und dass die Primärstruktur (28) unter dem Tragflächenkasten (14) ausschließlich mit Hilfe der vorderen Tragflächenhalterung (40) und der hinteren Tragflächenhalterung (42) befestigt wird.

11. Einheit nach Anspruch 10, **dadurch gekennzeichnet, dass** die hintere Tragflächenhalterung (42) einen Scherstift (80) aufweist, der ausgehend von der die Rückseite der Primärstruktur (28) verschließenden Querverstärkungsrippe (36a) nach hinten vorsteht, wobei der Scherstift (80) im Wesentlichen gemäß einer Längsrichtung (X) der Einheit angeordnet ist.

12. Einheit nach Anspruch 10 oder Anspruch 11, **dadurch gekennzeichnet, dass** die hintere Tragflächenhalterung (42) ebenfalls mindestens einen Schäkel (84) aufweist, der vom Scherstift (80) durchquert wird.

13. Einheit nach Anspruch 10, **dadurch gekennzeichnet, dass** die hintere Tragflächenhalterung (42) eine Einheit von Bolzen (244) aufweist, wobei jeder Bolzen einerseits ein Strukturbauteil (236) des Systems (4) und andererseits einen fest mit dem Flügel (2) verbundenen Beschlag (250) durchquert.

14. Einheit nach Anspruch 13, **dadurch gekennzeichnet, dass** die hintere Tragflächenhalterung (42) einen Scherstift (196) zur Aufnahme der gemäß einer Längsrichtung (X) und gemäß einer Querrichtung (Y) der Einheit ausgeübten Kräfte aufweist.

15. Luftfahrzeug (100), das mindestens eine Einheit (1) nach einem der vorhergehenden Ansprüche enthält.

## Claims

1. Assembly (1) for aircraft comprising:
- an aircraft wing (2) comprising a wing box (14) that consists in part of a forward stringer (16) and an intermediate stringer (18);
- an engine mounting pylon (4) arranged beneath the wing (2), the pylon comprising a primary structure in the form of a box (28) having an upper stringer (30) extending at least in part beneath the wing box (14), and also having a lower stringer (32), lateral panels (34) and transverse reinforcing ribs (36, 36a, 36b); and
- attachment means (40, 42) for attaching the primary structure (28) of the mounting pylon to the wing box (14),
**characterized in that** said attachment means comprise a line of bolts (44) along which each bolt passes both through a structural component (36, 136a, 136b) of the pylon (4) and through a fitting (50) attached to one of said forward and intermediate stringers (16, 18), and **in that** said structural component of the pylon corresponds to one of the transverse reinforcing ribs (36, 36a, 36b) and the line of bolts (44) is parallel to that of the forward and intermediate stringers (16, 18) to which the fitting (50) is attached.

2. Assembly according to Claim 1, **characterized in that** certain bolts (44) of the line of bolts pass through one of said transverse reinforcing ribs (36) of the primary structure (28), and **in that** other bolts (44) of this line pass through another transverse reinforcing rib (36) of the primary structure (28).

3. Assembly according to either one of the preceding claims, **characterized in that** each fitting (50) attached to one of said forward and intermediate stringers (16, 18) of the wing box is arranged outside this box (14).

4. Assembly according to any one of the preceding claims, **characterized in that** each fitting (50) attached to one of said forward and intermediate stringers (16, 18) is located in longitudinal continuity with an internal reinforcing rib (24) of the wing box, the internal reinforcing rib (24) being attached to each of said forward and intermediate stringers (16, 18) of this wing box.

5. Assembly according to any one of the preceding claims, **characterized in that** each fitting (50) attached to one of said forward and intermediate stringers (16, 18) has at least:
- a first attachment plate (52) for attaching to the forward stringer or the intermediate stringer (16, 18) ;
- a second attachment plate (54) that cooperates with at least one of said bolts (44) of the line of bolts, said first and second attachment plates (52, 54) being essentially orthogonal to one another; and
- preferably lateral flanks (56) that are as one with said first and second attachment plates (52, 54).

6. Assembly according to any one of the preceding claims, **characterized in that** at least one bolt (44) of the line of bolts is installed with a tight fit so that it can serve to react forces acting in a longitudinal direction (X) and in a transverse direction (Y) of the assembly.

7. Assembly according to any one of the preceding claims, **characterized in that** said fitting (50) is attached to the forward stringer (16) of the wing box (14) .

8. Assembly according to Claim 7, **characterized in that** the line of bolts (44) constitutes a forward wing mount (40), or **in that** said forward wing mount (40) further comprises a shear pin (94) for reacting forces acting in a longitudinal direction (X) and in a transverse direction (Y) of the assembly, with the shear pin (94) intersecting the line of bolts (44).

9. Assembly according to Claim 7, **characterized in that** the line of bolts (44) forms part of a forward wing mount (40), and **in that** said forward wing mount (40) further comprises two shear pins (194a, 194b) for reacting forces acting in a longitudinal direction (X) and in a transverse direction (Y) of the assembly, the two shear pins (194a, 194b) being spaced apart from one another in the transverse direction (Y).

10. Assembly according to one of Claims 7 to 9, **characterized in that** it also comprises a rear wing mount (42) arranged at a transverse reinforcing rib (36a) that closes the rear of the box-shaped primary structure (28), and **in that** the primary structure (28) is attached beneath the wing box (14) solely by means of the forward wing mount (40) and the rear wing mount (42).

11. Assembly according to Claim 10, **characterized in that** the rear wing mount (42) comprises a shear pin (80) that projects rearward from the transverse reinforcing rib (36a) closing the rear of the primary structure (28), the shear pin (80) being arranged essentially in a longitudinal direction (X) of the assembly.

12. Assembly according to Claim 10 or Claim 11, **characterized in that** the rear wing mount (42) also comprises at least one shackle (84) through which the shear pin (80) passes.

13. Assembly according to Claim 10, **characterized in that** the rear wing mount (42) comprises a set of bolts (244), each bolt passing both through a structural component (236) of the pylon (4) and through a fitting (250) that is secured to the wing (2).

14. Assembly according to Claim 13, **characterized in that** the rear wing mount (42) comprises a shear pin (196) for reacting forces that act in a longitudinal direction (X) and in a transverse direction (Y) of the assembly.

15. Aircraft (100) comprising at least one assembly (1) according to any one of the preceding claims.
